# FASCICULE DE BREVET EUROPEEN

(11) **EP 2 649 523 B1**
(45) Date de publication et mention de la délivrance du brevet: **17.06.2020**
(21) Numéro de dépôt: 11794120.3
(22) Date de dépôt: 06.12.2011
(51) Int. Cl.: G06F 8/41, G06F 8/52

(54) **MÉTHODE DE COMPILATION D'UN CODE INTERMÉDIAIRE D'UNE APPLICATION**
VERFAHREN ZUR ERSTELLUNG EINES ZWISCHENCODES EINER ANWENDUNG
METHOD FOR COMPILING AN INTERMEDIATE CODE OF AN APPLICATION

(30) Priorité: 06.12.2010 FR 1060149
(43) Date de publication de la demande: 16.10.2013
(73) Titulaire: Google LLC, Mountain View, CA 94043 (US)
(72) Inventeur: CABILLIC, Gilbert, F-35530 Brece (FR); LESOT, Jean-Philippe, F-35370 Argentre Du Plessis (FR)
(74) Mandataire: Thorniley, Peter
(86) Numéro de dépôt international: PCT/EP2011/071982
(87) Numéro de publication internationale: WO 2012/076557

(56) Documents cités:
- US-A1- 2002 095 664
- BENJAMIN VITALE ET AL: "Catenation and specialization for Tcl virtual machine performance", PROCEEDINGS OF THE 2004 WORKSHOP ON INTERPRETERS, VIRTUAL MACHINES AND EMULATORS , IVME '04, 1 janvier 2004 (2004-01-01), pages 42-50, XP55020186, New York, New York, USA DOI: 10.1145/1059579.1059591 ISBN: 978-1-58-113909-9
- GREGORY B. PROKOPSKI ET AL: "Analyzing the performance of code-copying virtual machines", PROCEEDINGS OF THE 23RD ACM SIGPLAN CONFERENCE ON OBJECT ORIENTED PROGRAMMING SYSTEMS LANGUAGES AND APPLICATIONS, OOPSLA '08, 1 janvier 2008 (2008-01-01), pages 403-421, XP55020187, New York, New York, USA DOI: 10.1145/1449764.1449796 ISBN: 978-1-60-558215-3
- DAVID GREGG ET AL: "Optimizing code-copying JIT compilers for virtual stack machines", CONCURRENCY AND COMPUTATION: PRACTICE AND EXPERIENCE, vol. 18, no. 11, 1 septembre 2006 (2006-09-01), pages 1465-1484, XP55020189, ISSN: 1532-0626, DOI: 10.1002/cpe.1016
- ERTL M A ET AL: "Retargeting JIT compilers by using C-compiler generated executable code", PARALLEL ARCHITECTURE AND COMPILATION TECHNIQUES, 2004. PACT 2004. PRO CEEDINGS. 13TH INTERNATIONAL CONFERENCE ON ANTIBES JUAN-LES-PINS, FRANCE SEPT. 29 - OCT. 3, 2004, PISCATAWAY, NJ, USA,IEEE, 29 septembre 2004 (2004-09-29), pages 41-50, XP010730246, DOI: 10.1109/PACT.2004.1342540 ISBN: 978-0-7695-2229-6
- DEBBABI M ET AL: "A selective dynamic compiler for embedded Java virtual machines targeting ARM processors", SCIENCE OF COMPUTER PROGRAMMING, ELSEVIER BV, NL, vol. 59, no. 1-2, 1 janvier 2006 (2006-01-01), pages 38-63, XP025056885, ISSN: 0167-6423, DOI: 10.1016/J.SCICO.2005.03.008 [extrait le 2006-01-01]
- BEN L. TITZER ET AL: "The ExoVM system for automatic VM and application reduction", PROCEEDINGS OF THE 2007 ACM SIGPLAN CONFERENCE ON PROGRAMMING LANGUAGE DESIGN AND IMPLEMENTATION , PLDI '07, 1 janvier 2007 (2007-01-01), pages 352-362, XP55020192, New York, New York, USA DOI: 10.1145/1250734.1250775 ISBN: 978-1-59-593633-2

## Description

### 1 DOMAINE DE L'INVENTION

L'invention se rapporte à la compilation d'application. La présente invention se rapporte plus particulièrement à la compilation et l'optimisation d'applications destinées à être mise en œuvre sur plusieurs plateformes logicielles et/ou matérielles différentes.

### 2 SOLUTIONS DE L'ART ANTÉRIEUR

Il existe plusieurs types d'environnement d'exécution d'application. Les environnements d'exécution permettant d'exécuter un code binaire directement exécutable par le processeur du terminal. Dans ce cas, le terminal dispose préalablement des interfaces de programmations (APIs, de l'anglais pour « Application Programming Interface ») utilisées pour développer l'application. A titre d'exemple, on peut citer le système Windows™ ou Linux™ qui peut s'exécuter sur différents processeurs avec différents périphériques. Le concepteur d'une application la développe au-dessus de librairies compatibles, l'application étant ensuite compilée en code binaire via l'environnement de développement. Le code binaire étant dépendant de chaque processeur, il faut développer un code binaire par type de processeur. L'avantage de cette approche est que le processeur exécute directement le code de l'application. Dans le cadre de système objet natif, tels que le C++ par exemple, notons que le runtime (de l'anglais pour « environnement d'exécution ») objet est lié en tant que librairie à l'application.

D'autres environnements permettent d'exécuter une application sous la forme d'un code intermédiaire au travers d'un runtime comprenant un ensemble de librairies et une machine virtuelle.

A titre d'exemple, le runtime Android™ privilégie le développement d'application en langage objet Java et offre un ensemble d'interface de programmation (API). L'environnement de développement va compiler le code Java™ de l'application en code intermédiaire DEX (« Dalvik Exécutable Code ») exécutable au travers la machine virtuelle Dalvik intégrée au runtime Android.

Dans ce type d'environnement, la machine virtuelle repose sur un système d'exploitation et une couche d'intégration des deux systèmes est réalisée afin de réaliser la passerelle entre les deux mondes natifs et virtuels. Cette intégration est très fortement couplée à la fois à la machine virtuelle et au système d'exploitation.

Afin d'exécuter le code intermédiaire, cette machine virtuelle peut soit comporter un interpréteur qui émule l'ensemble des instructions de code intermédiaire sur la machine, soit permet de compiler à l'aide d'un AOT (de l'anglais pour « Ahead of Time ») le code intermédiaire en code binaire avant de l'exécuter. Notons que dans le cadre de l'AOT, la compilation est limitée au code de l'application, celui-ci se basant sur des interfaces pour interagir avec la machine virtuelle et le runtime du terminal.

D'autres techniques de compilation permettent de réaliser la compilation dynamique de code intermédiaire en code binaire (JIT de l'anglais pour « Just In Time» ou DAC de l'anglais pour « Dynamic Adaptative Compilation »). Tout comme l'AOT, la compilation est limitée au code de l'application, celui-ci se basant sur des interfaces pour interagir avec la machine virtuelle et le runtime du terminal.

En effet le code binaire généré doit respecter certaines contraintes afin que la machine virtuelle et le runtime conservent le contrôle de l'exécution des différentes applications. Ainsi, il utilise une interface de communication spécifique pour la communication entre les deux mondes (virtuel/natif), ne peut pas s'occuper de la gestion mémoire des objets, ne doit pas réaliser une intrusion de la gestion objet quelle qu'elle soit (invocation, accès champs, etc....). Tout cela afin de respecter les contraintes qui permettent de ne pas remettre en cause le fonctionnement de la machine virtuelle et sa gestion globale du système.

Aussi, à cause de ces contraintes, les possibilités d'obtenir un maximum de code natif pour une application restent limitées. Rappelons que l'intérêt premier d'avoir un maximum de code natif est de pouvoir bénéficier d'une performance très supérieure à du code intermédiaire à la fois en l'exécutant sur le processeur sans interprétation, mais aussi en limitant les échanges entre les deux mondes qui pénalisent l'exécution

Ainsi, concernant une approche avec un runtime basé sur une machine virtuelle, celui-ci permet d'abstraire totalement ou partiellement les parties spécifiques du terminal et rend plus simple la possibilité d'exécuter une application sur un ensemble de terminaux différents. Mais le point faible de cette approche est de ne pas permettre d'avoir un code optimisé totalement pour chaque application.

B. Vitale et T. Abdelrahman, 'Catenation and Specialization for Tel Virtual Machine Performance', Proceedings of the 2004 Workship on Interpreters, Virtual Machines and Emulators, 1 janvier 2004, pages 42-50, présente des techniques pour éliminer les coûts liés à la dépêche dans un interpréteur à machine virtuelle, en utilisant un procédé simple de compilation juste à temps en code natif. Dans le contexte de la machine virtuelle Tel, ces techniques convertissent le bytecode en code natif Sparc, en concaténant les instructions natives utilisées par la machine virtuelle pour implémenter chaque instruction de bytecode. Les auteurs éliminent ainsi la boucle de dépêche. De plus, des arguments immédiats d'instructions de bytecode sont substitués dans le code natif à l'aide d'un procédé de spécialisation pendant l'exécution. Le code natif produit par compilateur C ne se prêtant pas à être relocalisé en étant copié, une correction du code est requise pour une exécution correcte. L'amélioration du nombre d'instructions dynamiques obtenu en évitant la dépêche dépend de la longueur, en instructions natives, de l'implémentation native de chaque opération de bytecode. Celles-ci sont relativement longues en Tel, mais la dépêche demeure un coût significatif. Cependant, leur longueur fait aussi que cette technique fait déborder la cache d'instructions. De plus, ce procédé de compilation native prend aussi du temps d'exécution. Quelques tests de référence finissent trois fois plus vite, mais environ la moitié ralentissent, ou ne changent peu.

G. Prokopski et C. Verbrugge, 'Analyzing the Performance of Code-copying Virtual Machines', Proceedings of the 23rd ACM Sigplan conference on object oriented programming systems, languages and applications, 1 janvier 2008, pages 403-421, décrit le 'code-copying', une technique d'optimisation d'interpréteur qui réduit l'écart de performance entre l'interprétation et la compilation JIT, offrant des gains de vitesse significatifs par rapport à une interprétation à thread direct. En raison d'une diversité de fonctionnalité entre langages et de design de machine virtuelle, cependant, tous les langages ne tirent pas le même bénéfice du 'code-copying'. Ici, les auteurs considèrent des caractéristiques de langages interprétés, et en particulier la construction de bytecodes et de machines virtuelles qui améliorent ou réduisent l'impact du 'code-copying'. Les auteurs ont implémenté le 'code-copying' et effectué une comparaison de performance par-rapport aux machines virtuelles originelles à thread direct pour trois langages, Java (SableVM), OCaml, et Ruby (Yarv), en examinant la performance sur trois architectures différentes : ia32 (Pentium 4), x86_64 (AMD64) et PowerPC (G5). Les meilleures accélérations sont obtenues pour ia32 et OCam1 (au mieux, par un facteur de 4.88, et par un facteur de 2.81 en moyenne), où un design de bytecode petit et simple facilite les améliorations à la prédiction de branchement apportées par le 'code-copying'. Yarv ne s'améliore que peu par rapport au direct-threading ; du fait des bytecodes larges, et de la fraction relativement brève de temps passée dans la boucle d'interpréteur à la fois limitent l'application du 'code-copying' et son effet global. Les auteurs sont en mesure de montrer qu'une analyse à l'avance simple des caractéristiques d'une machine virtuelle et de son exécution peut contribuer à déterminer si le 'code-copying' convient à une machine virtuelle particulière avant même qu'une implémentation du 'code-copying' soit tentée.

D. Gregg et A. Ert1, 'Optimizing code-copying JIT compilers for virtual stack machines', Concurrenty and Computation : Practice and Experience, vol. 18 no. 11, 1 septembre 2006, pages 1465-1484, décrit une alternative aux méthodes de génération de code spécifique à une machine, qui consiste à définir une routine dans un langage de haut niveau pour chaque instruction de machine virtuelle. Celles-ci peuvent être compilées en code natif à l'aide d'un compilateur C normal. Le code natif de ces routines peut ensuite être disposé en chaîne, ce qui permet de produire du code simple, non-optimisé en juste-à-temps. Dans cet article, les auteurs présentent un tel système basé sur une implémentation existante du langage Forth. Ils présentent un nouveau système d'optimisations pour le système basé sur l'exploitation de séquences communes d'instructions de machine virtuelle. Ils utilisent un petit langage spécifiques à un domaine et un outil associé afin de générer un code optimisé pour le stack pour des séquences d'instructions de machine virtuelle, et afin de choisir les séquences les plus utiles pour un compilateur à 'code-copying'. En mesurant la longueur du code exécutable résultant, ils permettent à des séquences spécifiques d'être choisies en absence de code spécifique à une machine dans le système. Les résultats expérimentaux montrent que les accélérations maximales (moyennes) de 47.2% (15.75%) sont possibles sur une machine Pentium 4, et sont encore plus élévées sur une machine PowerPC. De plus, les optimisations permettent de réduire la taille du code généré en moyenne de 17.9% sur le Pentium 4 et de 20.5% sur le PowerPC, sur un large éventail de programmes.

A. Ert1 et D. Gregg, 'Retargeting JIT compilers by using C-compiler generated executable code', Parallel Architecture and Compilation Techniques, 2004 PACT Proceedings, 13th international conference on Antibes Juan-les-Pins, France, Sept. 29-Oct. 3 2004, 29 septembre 2004, pages 41-50, explique que les compilateurs JIT produisent du code rapide, tandis que les interpréteurs sont faciles à porter entre architectures. Les auteurs proposent de combiner les avantages de ces techniques d'implémentation de langage comme suit: ils génèrent du code natif en concaténant et en corrigeant des fragments de code machine extraits du code dérivé d'un interpréteur (généré par un compilateur C) ; ils éliminent complètement les coûts de dépêche de l'interpréteur et les accès au code interprété en incorporant les adresses cibles de sauts et d'autres constantes dans les fragments. Dans cet article, ils présentent l'idée de base, discutent de certains problèmes plus en détail, et présentent des résultats d'une implémentation prototype, offrant des accélérations jusqu'à un facteur de 1.87 par rapport à la plus rapide technique antérieure basée sur un interpréteur et une performance comparables à des compilateurs en code natif simples. L'effort requis pour réadapter leur implémentation de l'architecture 386 à PPC était inférieure à une journée-personne.

### 3 RÉSUMÉ DE L'INVENTION

L'invention est spécifiée dans les revendications indépendantes. Le procédé de l'invention permet de lever ces contraintes en définissant un procédé de compilation permettant de compiler un code intermédiaire dans sa totalité en intégrant dans la compilation le code de la machine virtuelle et du runtime tout en préservant la sémantique du runtime d'exécution.

Selon l'invention, un tel procédé comprend :
une étape d'extraction de chaque instruction de code intermédiaire en un point d'entrée de fonction ;
une étape de compilation du code intermédiaire de l'application vers un code intégrant la gestion du flot de contrôle et appelant les points d'entrée de chaque fonction réalisant les instructions du code intermédiaire ;
une étape de compilation de du code applicatif compilé et des fonctions de code intermédiaire permettant de produire un seul et même binaire optimisé.

En d'autres termes, l'invention propose un procédé de compilation d'un code intermédiaire ou mixte ou source d'une application en code binaire natif dans sa totalité ou partiellement. Selon l'invention, ce procédé garantit à la machine virtuelle de garder le contrôle de l'exécution des applications, sans la perturber.

Selon une implémentation préférée, les différentes étapes du procédé selon l'invention sont mises en œuvre par un logiciel ou programme d'ordinateur, ce logiciel comprenant des instructions logicielles destinées à être exécutées par un processeur de données d'un module relais selon l'invention et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 décrit l'extraction des fonctions de code intermédiaire ;
- la figure 2 décrit la compilation de l'application sous forme d'appel des fonctions de code intermédiaire ;
- la figure 3 décrit la compilation en binaire de l'application intégrant les fonctions de code intermédiaire ;
- la figure 4 décrit un dispositif de mise à disposition selon l'invention.

### 5 DESCRIPTION DÉTAILLÉE DE L'INVENTION

### 5.1 Rappel du principe de l'invention

Le procédé s'applique à un environnement d'exécution (runtime) exécutant une machine virtuelle intégrant un interpréteur, qu'elle possède un AOT, un JIT ou un DAC.

L'objectif de ce procédé est de permettre de compiler une application sous code intermédiaire totalement en natif, tout en intégrant le code du runtime d'exécution et celui des fonctions de la machine virtuelle permettant de réaliser le code intermédiaire et de gérer le comportement de l'application au-dessus du système d'exploitation. En d'autres termes, on intègre le runtime de la machine virtuelle dans une application tout en intégrant au sein de cette nouvelle application les éléments logiciels de la machine virtuelle qui sont nécessaires à l'application.

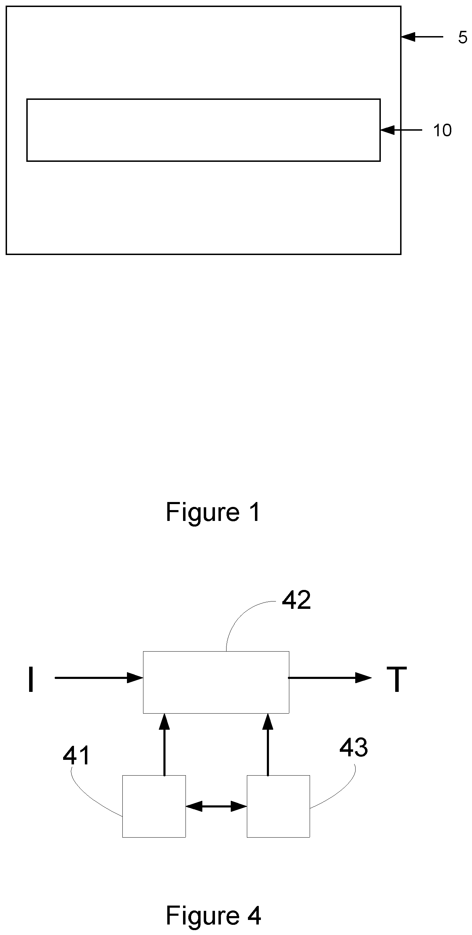

La première étape du procédé (10, fig 1) consiste à construire ou extraire une fonction pour chaque opération de code intermédiaire, selon la spécification de ce dernier.

Par exemple, s'il existe un code intermédiaire « opération X » qui nécessite deux arguments pour s'exécuter, une fonction code_intermédiaire_operation_X(param1, param2) est créée ou extraite.

Ainsi l'ensemble du code intermédiaire (05, fig 1) est disponible sous la forme d'un ensemble de fonctions. Cette découpe peut être réalisée manuellement ou automatiquement, préalablement à la compilation du code de l'application.

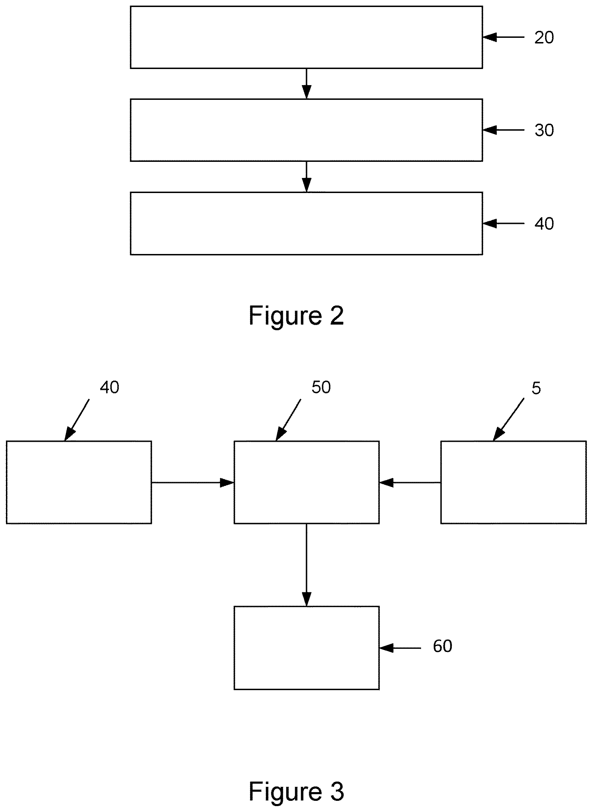

Dans une deuxième étape, un compilateur (30, fig 2) compile le code intermédiaire (20, fig 2) d'une application en un code appelant chacune de ces fonctions (40, fig 2). Ce compilateur permet également d'intégrer la gestion du flot d'exécution (par exemple les branchements directs) afin de rendre complètement indépendant de l'interpréteur de la machine virtuelle le code généré.

Par exemple, si un code intermédiaire « 0x43 0x22 0x21 » correspond à l'opération_X avec « 0x22 » et « 0x21 » comme paramètre, il est converti en un appel à la fonction opération_X(0x22, 0x21). Cette opération est appelée translation.

Dans une troisième étape un compilateur (50, fig3) compile le code de l'application issue de la translation (40, fig3) à l'aide des fonctions du runtime (5, fig3) afin de produire un code binaire optimisé (60, fig3).

De ce fait, le code du runtime et de la machine virtuelle se retrouvent compilés simultanément au travers de la compilation du code de l'application compilé. Ce procédé permet ainsi de générer à partir du code intermédiaire de l'application, du code binaire qui permet de ne plus avoir besoin de l'interpréteur de la machine virtuelle, ainsi que d'un AOT, JIT ou DAC qui pourrait y être associé.

De plus, compte tenu du fait que chaque code intermédiaire est identique à celui d'origine, et que le compilateur permet de réaliser le contrôle du flot d'exécution similaire à ce que l'interpréteur de la machine virtuelle aurait réalisé, la sémantique et comportement du programme binaire sera identique à celui interprété par la machine virtuelle. Ainsi le code intermédiaire est compilé sous une forme native sans remise en cause de la gestion globale de machine virtuelle. L'application devient un processus du système d'exploitation utilisant les librairies natives du runtime d'exécution et de la machine virtuelle (sans l'interpréteur) et en utilisant les instructions du processeur. L'application devient un processus indépendant de l'interpréteur et du processus de la machine virtuelle.

En permettant de supprimer l'utilisation de l'interpréteur de la machine virtuelle, ce procédé de compilation permet également d'alléger la charge mémoire de données de la plateforme et améliore la performance du terminal.

Dès lors que l'ensemble du code s'exécute en natif, le compilateur a également l'opportunité de réaliser des optimisations plus agressives qu'il ne pouvait réaliser précédemment à cause de l'interface d'accès de la machine virtuelle. Le procédé de compilation permet ainsi d'obtenir l'optimisation maximale possible pour une compilation statique du code d'une application.

Compte tenu du fait que les communications entre le code natif et la machine virtuelle sont totalement supprimées et que le code natif s'exécute sans besoin de l'interpréteur de la machine virtuelle directement par le processeur, la performance globale du terminal est accrue et la consommation d'énergie du terminal est réduite.

Appliqué sur l'ensemble des codes intermédiaire d'un terminal, ce procédé permet par ailleurs de s'abstraire complètement de l'interpréteur de la machine virtuelle, ainsi que du JIT/DAC ou AOT couplé à celle-ci. La totalité du code devient natif, seul demeure le système d'exploitation et les parties natives du runtime d'exécution.

Dans une implémentation particulière, la translation et la compilation pourra être réalisée hors-ligne, directement par l'environnement de développement du terminal.

Dans une autre implémentation, la translation pourra être réalisée hors-ligne directement par l'environnement de développement du terminal et la compilation en binaire réalisée sur le terminal, si un compilateur est disponible sur le terminal.

Dans une autre implémentation, la translation et la compilation en binaire sont réalisées sur le terminal, si un compilateur est disponible sur le terminal.

Il est à noter que cette méthode permet de continuer de réaliser des évolutions du runtime en modifiant le code de chaque fonction réalisant le code intermédiaire. Il est ainsi possible de faire évoluer les fonctions et spécification du runtime d'exécution.

La figure 4 représente de manière simplifiée un exemple de structure d'un dispositif de mise à disposition selon un mode de réalisation de l'invention.

Par exemple, le dispositif de mise à disposition comprend une mémoire 41 constituée d'une mémoire tampon, une unité de traitement 42, équipée par exemple d'un microprocesseur et de mémoire vive, et pilotée par le programme d'ordinateur 43, mettant en œuvre un procédé de l'invention.

À l'initialisation, les instructions de code du programme d'ordinateur 43 sont par exemple chargées dans une mémoire avant d'être exécutées par le processeur de l'unité de traitement 42. Le microprocesseur, la mémoire vive, le programme d'ordinateur coopèrent ensemble et forment les moyens de mise en œuvre du procédé de l'invention dans ce mode de réalisation. Dans d'autres modes de réalisation des modules matériels de traitement spécifique peuvent être implémentés pour mettre en œuvre l'invention.

### 5.2 Description d'un mode de réalisation particulier.

Ci-après nous décrivons une implémentation particulière construite à l'aide du compilateur LLVM (de l'anglais pour « Low Level Virtual Machine »). LLVM est une infrastructure de compilateur qui est conçue pour optimiser la compilation, l'édition de liens, l'exécution et les temps morts dans un programme écrit dans un langage quelconque. Les outils de compilation LLVM comprennent un ensemble d'outils de compilation se basant sur un code intermédiaire nommé bytecode. LLVM comporte notamment un éditeur de liens (linker), capable de lier plusieurs fichiers de code bytecode en un seul code bytecode. LLVM comprend également un optimiseur capable d'optimiser un code bytecode en un code bytecode optimisé indépendant du processeur. Cet optimiseur possède de très nombreuses optimisations. LLVM possède également plusieurs générateurs de code binaire. Ces générateurs peuvent s'exécuter soit sur le terminal, soit sur un serveur ou une machine de développement. LLVM présente l'avantage de disposer d'un grand nombre de générateurs pour différents type de processeur, ainsi qu'un nombre important d'optimisations utilisables de façon indépendante du processeur cible.

LLVM est un compilateur disposant d'une représentation intermédiaire (IR). Comme la plupart des compilateurs, LLVM à la notion de bloc de base, qui est une suite séquentielle d'instructions ne contenant pas d'instructions de branchement. Un bloc de base ne peut se terminer que par un branchement, conditionnel ou non, sur un autre bloc de base, ou bien par une instruction « Unreachable » ou bien encore par une instruction « return ». LLVM possède également une notion de fonction similaire à la notion de fonction d'un langage impératif, avec des paramètres d'entrées et un paramètre de sortie. LLVM possède également la notion d' « alloca », utilisé pour stocker une variable locale à une fonction.

Soit *A* une application, dont le code exécutable est constitué d'une multitude de fonctions ou méthodes *Mi* constituées elles-mêmes d'instructions d'un langage intermédiaire *LI.* Soit *MV,* une machine virtuelle pouvant interpréter chaque instruction du langage intermédiaire *LI. MV* est composée d'un interpréteur qui pour chaque instruction *Ij* de *LI* exécute un fragment de code *Cj. Cj* est écrit soit dans un langage particulier, de haut niveau comme le langage C, ou de bas niveau comme en assembleur.

Partant de ces hypothèses, la mise en œuvre de l'invention est la suivante selon un mode de réalisation. Bien entendu, d'autres modes de réalisation sont envisageable en fonction des contraintes du langage intermédiaire.

Pour obtenir l'application A dans un format binaire compatible avec le comportement de *MV,* le code exécutable de *A* est tout d'abord compilé en une série d'instructions LLVM par l'intermédiaire d'un compilateur C. Pour ce faire, dans un mode de réalisation, pour chaque méthode *Mi* de *A,* C crée une fonction *Fi.* Pour chaque instruction *Ij* de *Mi,* C crée un bloc de base *Bj,* et maintient une table de correspondance entre *Ij* et *Bj,* ci après nommée *Ti.* Dans un mode de réalisation, pour chaque variable *Vk* de *Mi,* C crée un « alloca » LLVM *Ak.*

Puis, dans un mode de réalisation, pour chaque instruction *Ij* de *Mi :*
- Pour une instruction *Ij* ne modifiant pas le flot de contrôle de *A,* C génère dans *Bj* une instruction d'appel à une fonction qui contient le code *Cj* en provenance de *MV.* Si *Ij* prend en opérande une variable *Vk,* alors l'alloca *Ak* est passé en paramètre à *Cj.* Si *Ij* prend en opérande une valeur littérale *L,* alors *L* est passé en paramètre à *Cj.* Enfin, C génère une instruction se branchant inconditionnellement sur le bloc de base suivant, *Bj*+*1.*
- Pour une instruction *Ij* modifiant exclusivement le flot de contrôle de *A* (c'est-à-dire les instructions de branchements inconditionnels, branchements conditionnels, ...) C génère dans *Bj* une instruction de branchement équivalents à *Ij* dans IR en s'aidant de la table de correspondance *Ti.*
- Pour une instruction *Ij* modifiant le flot de contrôle au moyen d'exception, C génère dans *Bj* une instruction d'appel à une fonction qui contient le code *Cj* en provenance de *MV.* Si *Ij* prend en opérande une variable *Vk,* alors l'alloca *Ak* est passé en paramètre à *Cj.* Si *Ij* prends en opérande une valeur littérale *L*, alors *L* est passé en paramètre à *Cj.* Puis C génère à la suite un code qui vérifie qu'aucune exception n'a été lancée par *Cj.* Si c'est le cas, C génère dans *Bj* une instruction de branchement à un bloc de base *BEj.* Si ce n'est pas le cas, C génère une instruction branchant inconditionnellement sur le bloc de base suivant, *Bj*+*1.*

A la fin de ce processus, C génère dans chaque bloc de base *BEj,* une instruction qui écrit un « alloca » *PC* avec la valeur *j,* puis une instruction qui branche sur un bloc de base d'un dispatcher *BDi.*

A la fin de ce processus, C génère dans le bloc de base *BDi,* un appel à une fonction présente dans *MV* pour dispatcher les exceptions en fonction de la localisation de l'exception contenue dans *PC.* En retour, cette fonction renvoie une nouvelle localisation de branchement *t.* C génère alors une instruction de *IR* capable à partir de la valeur *t,* de brancher sur le bloc de base *Bt.*

Une fois ce processus terminé, le code intermédiaire généré contient autant de fonction *Fi* que de méthode *Mi* de l'application A d'origine.

Une librairie runtime *RT*, contenant tous les codes *Cj* de *MV,* ainsi que tous les codes référencés récursivement par les codes *Cj,* est ensuite générée en utilisant un compilateur comprenant le langage des codes *Cj* et générant du code intermédiaire de LLVM. Par exemple, si les codes *Cj* sont écrits en langage C, le programme LLVM « clang » permet de transformer ces codes en code intermédiaire de LLVM (bytecode).

Enfin, la chaine de compilation de LLVM permet au moyen de l'éditeur de lien, de l'optimiseur et du générateur de code de prendre toutes les fonctions *Fi* de *A,* toutes les fonctions *Fi* des librairies récursivement utilisées par *A,* ainsi que la libraire *RT,* de les lier, de les optimiser, et de les traduire en code binaire.

Parce que la chaine de compilation LLVM permet de faire des optimisations durant la phase de linkage du programme, le code binaire obtenu sera fortement optimisé, les appels aux fonctions renfermant *Cj* pouvant, par exemple, avoir disparu pour laisser le code *Cj* directement dans le corps des fonctions *F.*

A la fin de ce processus, on obtient un code binaire natif de l'application *A* fortement optimisé et dont l'exécution est similaire à l'exécution de l'application *A* par la machine virtuelle *MV,* puisque les codes mis en jeux par cette exécution proviennent de *MV,* à l'exception des codes de flot de contrôle qui sont transférés d'un interpréteur dans la version de l'application A utilisant la machine virtuelle *MV* à l'utilisation des instructions de flot de contrôle du processeur cible dans la version binaire de l'application *A*.

Bien entendu, dans d'autres modes de réalisation, il est également possible de ne sélectionner que certaines méthodes, que certaines instruction et/ que certaines variable. Les modes de réalisation présentés précédemment mettent en œuvre les opérations décrites globalement, mais il est possible de les mettre en œuvre de manière ciblée, en fonction des optimisations que l'on souhaite apporter et du degré d'indépendance que l'on souhaite obtenir vis-à-vis de la machine virtuelle et de son interpréteur. Les phases d'extraction et de compilation de code intermédiaire sont alors adaptées aux besoins.

## Revendications

1. Procédé de compilation d'un code intermédiaire (20) d'une application d'origine, ladite application d'origine s'exécutant par l'entremise d'une machine virtuelle, ledit procédé délivrant une application native comprenant un code binaire natif, ledit procédé comprenant:
une première étape de construction d'une fonction (5) pour chaque opération de code intermédiaire selon la spécification du code intermédiaire ;
une deuxième étape de compilation des instructions du code intermédiaire (20) de l'application en un code (40) appelant les fonctions (5) construites lors de la première étape, réalisant les instructions du code intermédiaire (20), et intégrant une gestion du flot de contrôle afin de rendre le code (40) indépendant de l'interpréteur de la machine virtuelle ;
une troisième étape de compilation et d'optimisation du code (40) obtenu lors de la deuxième étape et des fonctions (5) construites lors de la première étape en intégrant le code du runtime d'exécution, délivrant ladite application native optimisée (60).

2. Dispositif de compilation d'un code intermédiaire (20) d'une application d'origine, ladite application d'origine s'exécutant par l'entremise d'une machine virtuelle, ledit dispositif délivrant une application native comprenant un code binaire natif, ledit procédé comprenant :
des moyens de construction d'une fonction (5) pour chaque opération de code intermédiaire, selon la spécification du code intermédiaire ;
des moyens de compilation des instructions du code intermédiaire (20) de l'application en un code (40) appelant les fonctions (5) construites par les moyens de construire, réalisant les instructions du code intermédiaire (20), et intégrant une gestion du flot de contrôle afin de rendre le code (40) indépendant de l'interpréteur de la machine virtuelle;
des moyens de compilation et d'optimisation du code (40) généré par les moyens de compilation des instructions du code intermédiaire de l'application et des fonctions (5) construites par les moyens de construire en intégrant le code du runtime d'exécution, délivrant ladite application native optimisée (60).

3. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de compilation selon la revendication 1, lorsqu'il est exécuté sur un ordinateur.

## Patentansprüche

1. Verfahren zum Kompilieren eines Zwischencodes (20) einer ursprünglichen Anwendung, wobei diese ursprüngliche Anwendung über eine virtuelle Maschine ausgeführt wird, wobei das Verfahren eine native Anwendung mit einem nativen Binärcode bereitstellt, während dieses Verfahren Folgendes umfasst:
einen ersten Schritt zum Erstellen einer Funktion (5) für jede Operation des Zwischencodes gemäß der Spezifikation des Zwischencodes;
einen zweiten Schritt zum Kompilieren der Anweisungen des Zwischencodes (20) der Anwendung zu einem Code (40), der die Funktionen (5) aufruft, die im ersten Schritt erstellt wurden, der die Anweisungen des Zwischencodes (20) ausführt und in den eine Steuerung des Kontrollflusses integriert ist, um den Code (40) unabhängig vom Interpreter der virtuellen Maschine zu machen;
einen dritten Schritt zum Kompilieren und Optimieren des Codes (40), der im zweiten Schritt erhalten wurde, und der Funktionen (5), die im ersten Schritt durch Integrieren des Ausführungs-Laufzeitcodes erstellt wurden, wodurch diese native optimierte Anwendung (60) bereitgestellt wird.

2. Vorrichtung zum Kompilieren eines Zwischencodes (20) einer ursprünglichen Anwendung, wobei diese ursprüngliche Anwendung über eine virtuelle Maschine ausgeführt wird, wobei die Vorrichtung eine native Anwendung mit einem nativen Binärcode bereitstellt, während dieses Verfahren Folgendes umfasst:
Mittel zum Erstellen einer Funktion (5) für jede Operation des Zwischencodes gemäß der Spezifikation des Zwischencodes;
Mittel zum Kompilieren der Anweisungen des Zwischencodes (20) der Anwendung zu einem Code (40), der die Funktionen (5) aufruft, die mit den Mitteln zum Erstellen erstellt wurden, der die Anweisungen des Zwischencodes (20) ausführt und in den eine Steuerung des Kontrollflusses integriert ist, um den Code (40) unabhängig vom Interpreter der virtuellen Maschine zu machen;
Mittel zum Kompilieren und Optimieren des Codes (40), der durch die Mittel zum Kompilieren der Anweisungen des Zwischencodes der Anwendung erhalten wurde, und der Funktionen (5), die durch die Mittel zum Erstellen durch Integrieren des Ausführungs-Laufzeitcodes erstellt wurden, wodurch diese native optimierte Anwendung (60) bereitgestellt wird.

3. Computer-Programmprodukt, das von einem Kommunikationsnetzwerk heruntergeladen und/oder auf einem von einem Computer lesbaren Datenträger gespeichert und/oder durch einen Mikroprozessor ausgeführt werden kann, **dadurch gekennzeichnet, dass** dieses Produkt Programmcodeanweisungen für die Ausführung des Verfahrens zum Kompilieren nach Anspruch 1 umfasst, wenn es auf einem Computer ausgeführt wird.

## Claims

1. A method of compiling intermediate code (20) of an original application, said original application executing via a virtual machine, said method outputting a native application comprising a native binary code, said method comprising:
a first step of constructing a function (5) for each intermediate code operation according to the specification of the intermediate code;
a second step of compiling the intermediate code (20) of the application into a code (40), which calls the functions (5) constructed in the first step, implements the intermediate code (20) of the application and incorporates control flow management, in order to make the compiled application code (40) independent of the interpreter of the virtual machine;
a third step of compiling and optimizing the code (40) obtained at the second step and the functions (5) constructed in the first step by integrating the code of the execution runtime, outputting said optimized native application (60).

2. Device for compiling intermediate code (20) of an original application said original application running via a virtual machine, said device delivering a native application comprising a native binary code, said method comprising
means for constructing a function (5) for each intermediate code operation according to the specification of the intermediate code;
means for compiling the instructions of the intermediate code (20) of the application into a code (40), which calls the functions constructed by the means for constructing, implements the instructions of the intermediate code (20) and integrates control flow management, in order to make the compiled application code (40) independent of an interpreter of the virtual machine;
means for compiling and optimizing the code (40) generated by the means for compiling the instructions of the intermediate code of the application and the functions (5) constructed by the means for constructing by integrating the code of the execution runtime, outputting said optimized native application (60).

3. Computer program product downloadable from a communication network and / or stored on a computer readable medium and / or executable by a microprocessor, **characterized in that** it comprises program code instructions for the execution of the compilation method according to claim 1, when executed on a computer.
